# EUROPEAN PATENT APPLICATION

(11) **EP 2 590 071 A1**
(43) Date of publication of application: **08.05.2013**
(21) Application number: 12191283.6
(22) Date of filing: 05.11.2012
(51) Int. Cl.: G06F 9/44, G06F 9/54

(54) **Storage device including software development kit that supports multiple types of platforms and multiple programming languages**

(30) Priority: 05.11.2011 JP 2011242937; 05.11.2011 JP 2011242939
(71) Applicant: Kyocera Document Solutions Inc., Chuo-ku Osaka 540-8585 (JP)
(72) Inventor: Oguma, Takashi, Chuo-ku, Osaka 540-8585 (JP); Ueno, Shingo, Chuo-ku, Osaka 540-8585 (JP); Kasai, Rie, Chuo-ku, Osaka 540-8585 (JP); Higashimori, Toshihide, Chuo-ku, Osaka 540-8585 (JP)
(74) Representative: Fox-Male, Nicholas Vincent Humbert

(57) **Abstract**

A storage device including an SDK includes a first native library configured to support a first platform and a second native library configured to support a second platform. The storage device also includes a first wrapper class that may be configured to be used with the first native library and the second native library, and the first wrapper class may be configured such that at least one of a first function or a first method in the first native library and the second native library can be called in a first intermediate language. The storage device also includes a second wrapper class configured to be used with the first native library and the second native library, and the second wrapper class may be configured such that at least one of a second function or a second method in the first native library and the second native library can be called in a second intermediate language.

## Description

### INCORPORATION BY REFERENCE

This application is based upon, and claims the benefit of priority from, corresponding Japanese Patent Application Nos. 2011-242939 and 2011-242937, filed in the Japan Patent Office on November 5, 2011, the entire contents of which is incorporated herein by reference.

### FIELD

The present disclosure relates to a storage device including a software development kit (SDK) that supports multiple types of platforms and multiple programming languages.

### BACKGROUND

For security reasons, many businesses generally prohibit personal computers from being brought into or used in offices.

However, as the use of mobile terminals such as smartphones becomes more prevalent, such prohibitions are being removed under certain conditions to improve efficiency in business processes. In fact many businesses are now integrating employees' smartphones into their business processes.

Since smartphones, such as iPhone®, Android®, and Windows Phone®, use different platforms and different programming languages, integration of these various smartphones can be difficult. For example, it can be time consuming to develop applications for each different type of smartphone. Moreover, because each of the different platforms is programmable using only one programming language, an SDK having a complex configuration that supports multiple types of platforms and multiple programming languages can be appreciated.

Although smartphones have lower CPU performance and less memory capacity than desktop computers, smartphones still must be capable of processing relatively large images and performing high-speed processing. In many cases, to employ such capability, smartphones often use the C programming language, which is similar to machine language and platform-independent.

However, because the C language is a low-level programming language, it is generally more difficult to program and may take more time to develop native libraries and applications. Therefore, the C language is only used for configurations where high-speed processing is required.

Native libraries obtained by compiling code written in the C or C++ language can be linked, using a Java Native Interface (JNI) or C++/common language infrastructure (CLI), to intermediate language programs obtained by compiling code written in Java or C++.

In the related art, however, the linkage between Java and C or C++ is made independent of the linkage between C# and C or C++. This causes delays in the development and improvement of native libraries, and consequently results in delays in the development and improvement of applications for multiple types of smartphones.

### SUMMARY

The present disclosure relates to a storage device including an SDK that supports multiple types of platforms and multiple programming languages.

According to the present disclosure, a storage device including an SDK includes a first native library configured to support a first platform and a second native library configured to support a second platform. The SDK also includes a first wrapper class that may be configured to be used with the first native library and the second native library, and the first wrapper class may be configured such that at least one of a first function or a first method in the first native library and the second native library can be called in a first intermediate language. The SDK also includes a second wrapper class configured to be used with the first native library and the second native library, and the second wrapper class may be configured such that at least one of a second function or a second method in the first native library and the second native library can be called in a second intermediate language.

Additional features and advantages are described herein, and will be apparent from the following Detailed Description and the figures.

### BRIEF DESCRIPTION OF FIGURES

In the accompanying drawings:

FIG. 1 is a schematic diagram illustrating a configuration of an image forming system that uses multiple cloud services according to an embodiment of the present disclosure.

FIG. 2 is a block diagram illustrating a configuration of an image forming apparatus of the image forming system.

FIG. 3 is a block diagram illustrating a configuration of a mobile terminal of the image forming system.

FIG. 4 is a block diagram illustrating a hardware configuration of a personal computer (PC) of the image forming system.

FIG. 5 is a block diagram illustrating a configuration of the PC used as a software development apparatus.

FIG. 6A is a block diagram illustrating a configuration of a control module for a first platform and a wrapper application programming interface (API) at a level lower than the control module.

FIG. 6B is a block diagram illustrating a configuration of a control module for a second platform and a wrapper API at a level lower than the control module.

FIG. 7 is a flowchart illustrating a process of a type-conversion method included in a wrapper class.

FIG. 8A is a flowchart illustrating a process of generating the control module for the first platform of FIG. 6A.

FIG. 8B is step S10 in the flowchart of FIG. 8A.

FIG. 9A is a flowchart illustrating a process of generating the control module for the second platform of FIG. 6B.

FIG. 9B is step S20 in the flowchart of FIG. 9A.

### DETAILED DESCRIPTION

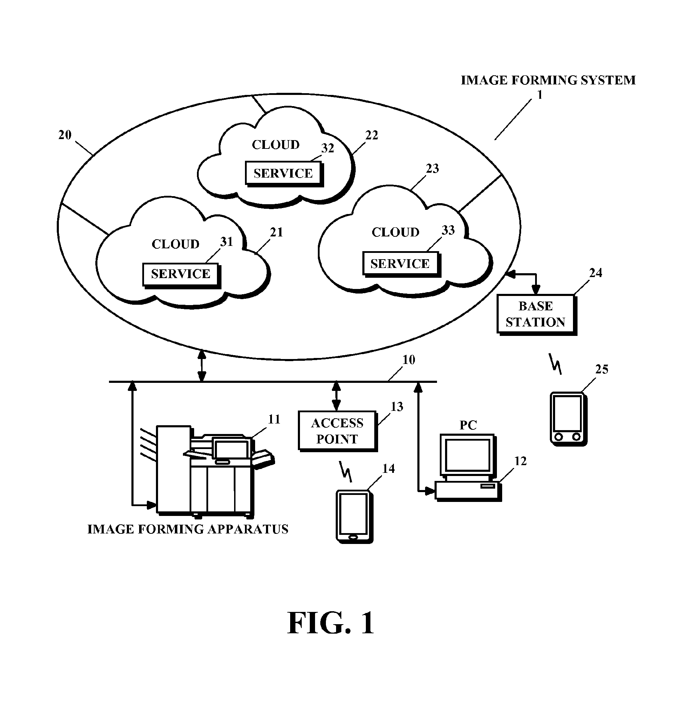

FIG. 1 is a schematic diagram illustrating the configuration of an image forming system 1 that uses multiple cloud services according to an embodiment of the present disclosure.

The image forming system 1 includes an image forming apparatus 11, a PC 12 that serves as a user terminal, and an access point 13 of a wireless local area network (LAN). The image forming apparatus 11, PC 12, and access point 13 are communicatively connected to an intranet 10. A smartphone 14 serving as a mobile terminal is communicatively connected via the access point 13 to the intranet 10. The intranet 10 is connected via a router (not illustrated) to the Internet 20. Multiple clouds 21, 22, 23 are communicatively connected to the Internet 20. A base station 24 is communicatively connected to the Internet 20. Smartphones 14 and 25 are communicatively connected via base station 24 to the intranet 10.

The clouds 21, 22, 23 are capable of providing cloud services 31, 32, 33, respectively, to client terminals such as PC 12 and smartphones 14 and 25, for example.

Installing extended applications onto PC 12 and smartphones 14 and 25 enables the users to execute Web services, obtain setting information of the image forming apparatus 11, and change the setting information of the image forming apparatus 11 from the PC 12 and/or the smartphones 14 and 25. Example Web services may include basic services (e.g., copying, printing, and faxing) of the image forming apparatus 11, cloud services 31, 32, 33, or combinations of these services.

In FIG. 1, a plurality of PC terminals are represented by the PC 12, a plurality of mobile terminals connected to the access point 13 are represented by the smartphone 14, and a plurality of mobile terminals connected to the base station 24 are represented by the smartphone 25.

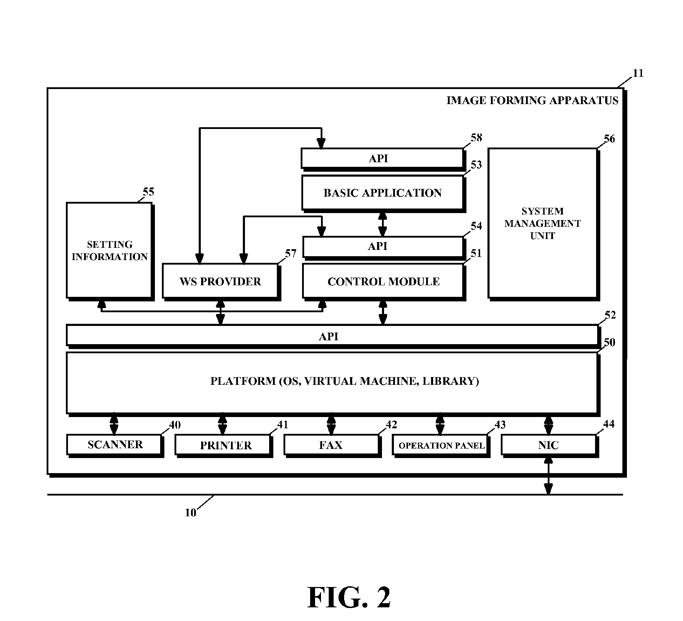

FIG. 2 is a block diagram illustrating the configuration of image forming apparatus 11 of the image forming system 1.

The image forming apparatus 11 includes a scanner 40, a printer 41, a facsimile (FAX) 42, an operation panel 43, and a network interface card (NIC) 44 as hardware components. Through a platform 50, the image forming apparatus 11 controls input and output to and from the hardware components 40-44.

The platform 50 includes, for example, an operating system (OS) that performs the above-described input and output control, manages a power supply, and carries out communication using a protocol, such as the transmission control protocol/Internet protocol (TCP/IP). Platform 50 also includes various device drivers at a level lower than the OS, virtual machines (or class libraries) on the OS such as a Java Virtual Machine (JVM) and/or a Common Language Runtime (CLR), and a standard library.

A control module 51 is an extended class library that controls the hardware components 40-44 on a function-by-function basis via an API 52 of the platform 50. A basic application 53 controls the hardware components 40-44 in units of logical functions, such as copying, printing, and faxing via an API 54 of the control module 51.

Setting information for the hardware components 40-44 is stored in a setting information database 55 by the control module 51 in response to an operation conducted using the operation panel 43. The setting information is displayed on the operation panel 43 by the control module 51 in response to an operation conducted using the operation panel 43.

Through the API 52 or the API 54, a system management unit 56 performs user authentication, authorization processing, error management, or power saving management.

A request from the PC 12, the smartphone 14, and/or the smartphone 25 for a service in the image forming apparatus 11 is transmitted through the NIC 44 and the platform 50 to a Web service (WS) provider 57. In response to the service request, the Web service provider 57 makes the basic application 53 work via an API 58, reads or changes the setting information in the setting information database 55 via the API 54, and returns the result.

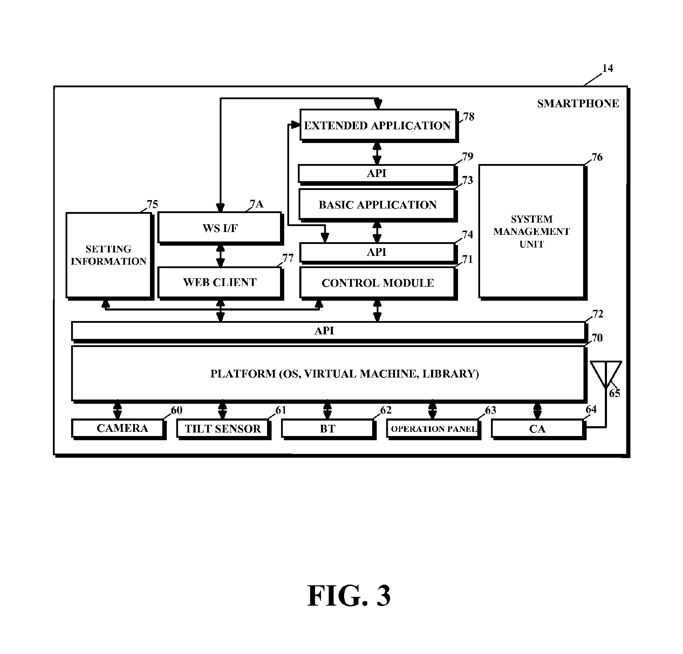

FIG. 3 is a block diagram illustrating the configuration of smartphone 14 of the image forming system 1. The configuration of the smartphone 25 is the same as that of the smartphone 14.

Smartphone 14 includes a camera 60, a tilt sensor 61, a Bluetooth communication unit (BT) 62, an operation panel 63, and a communication adapter (CA) 64 as hardware components. An antenna 65 is connected to the communication adapter 64. Via a platform 70, the smartphone 14 controls the input and output to and from the hardware components 60-64.

The platform 70 includes an OS that performs the above-described input and output control, manages power supply, and carries out communication using a protocol, such as TCP/IP. Platform 70 also includes various device drivers at a level lower than the OS, virtual machines on the OS, and a standard library.

Control module 71 is an extended class library that controls the hardware components 60-64 on a function-by-function basis via API 72 of platform 70. A basic application 73 includes a browser, a video player, and an address book. Via API 74 control module 71, the basic application 73 controls the hardware components 60-64 in units of logical functions.

Setting information for the hardware components 60-64 is stored in a setting information database 75 by the control module 71 in response to an operation performed using the operation panel 63. The setting information is displayed on the operation panel 63 by the control module 71 in response to an operation performed using the operation panel 63.

A system management unit 76 performs user authentication, authorization processing, error management, or power saving management via API 72 or API 74.

In response to an operation being performed on the operation panel 63, a Web Client 77 specifies a uniform resource locator (URL), via API 72, to transmit a request for a service in the image forming apparatus 11 (i.e., requests the image forming apparatus to perform a service) using the hypertext transfer protocol (HTTP), and displays a response to the request on the operation panel 63.

Using API 79 of the basic application 73, an extended application (user application) 78 executes a single function or a combination of functions. Additionally, via API 74, the extended application 78 reads the setting information in the setting information database 75 and displays the setting information on the operation panel 63, or changes the setting information in the configuration information database 75.

A Web service interface (WS I/F) 7A includes a service proxy (not shown) for calling a Web service as an internal method, a serializer (not shown) that converts the internal method call to an extensible markup language (XML) format at the time of transmission, and a deserializer (not shown) that converts the XML format to a return value of the internal method at the time of reception.

Through the WS I/F 7A and the Web Client 77, the extended application 78 requests cloud services 31, 32, 33 through the Web service provider 57 of the image forming apparatus 11 or through the clouds 21, 22, 23. The extended application 78 receives a result of the request through the Web Client 77 and the Web service interface 7A and displays the received result on the operation panel 63.

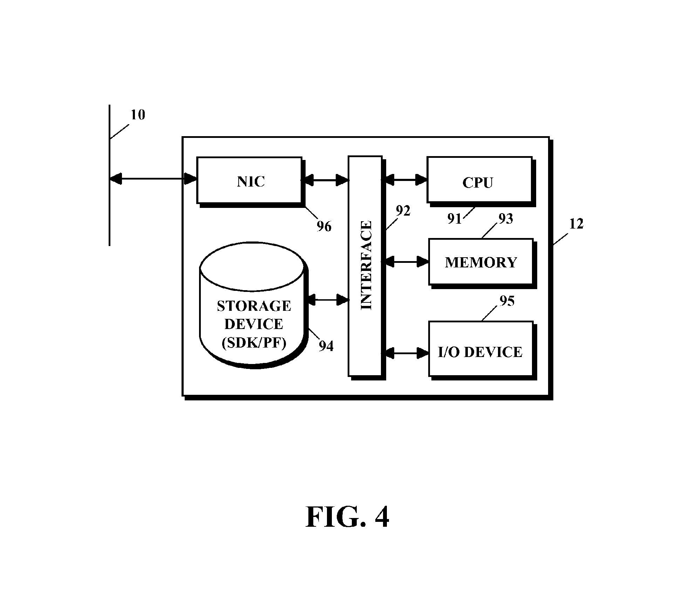

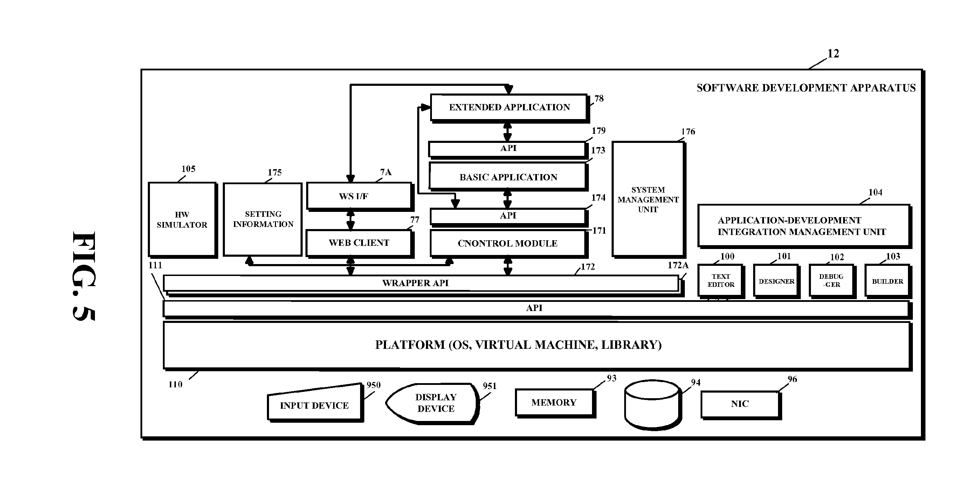

FIG. 4 is a block diagram illustrating the hardware configuration of PC 12 of the image forming system 1. FIG. 5 is a block diagram illustrating the configuration of the PC 12 used as a software development apparatus.

In FIG. 4, software development apparatus 12 (i.e., PC 12) includes a central processing unit (CPU) 91 is connected through an interface 92 to a memory 93, a storage device 94, an input/output (I/O) device 95, and an NIC 96. A plurality of interfaces are represented by the interface 92.

The interface 92 includes, for example, a flash memory that stores a basic input/output system (BIOS) and a dynamic random-access memory (DRAM) used as a main memory. The storage device 94 stores an OS, various device drivers, libraries, and virtual machines as a platform (PF). The storage device 94 further stores an SDK.

The software development apparatus 12 supports development of the extended application 78 of the smartphone 14 illustrated in FIG. 3. The software development apparatus includes native libraries that can be used in the development of the extended application to enable high-speed processing in the smartphone, allows development of the extended application 78 of the smartphone to include any one of multiple types of platforms, and supports multiple programming languages to allow selection of any of the programming languages to develop the application. The NIC 96 is communicatively connected to the intranet 10.

SDK components 172A, 171, 173-176, and 179 of the software development apparatus illustrated in FIG. 5 correspond to the components 72, 71, 73-76, and 79, respectively, of the smartphone 14 illustrated in FIG. 3. The SDK components 172A, 171, 173-176, and 179 of the software development apparatus (PC 12) may only include the corresponding SDK components of the smartphone 14 that are required to develop the extended application 78 of the smartphone 14. A wrapper API 172 wraps an API 111 to make the API 111 appear identical to the API 72.

The software development apparatus 12 includes a text editor 100, a designer 101, a debugger 102, and a builder 103. The software development apparatus 12 further includes an application-development integration management unit 104 that performs a process of calling at least one of the text editor 100, the designer 101, the debugger 102, and the builder 103 in response to a user operation and/or a project generating process.

Designer 101 supports the development of an application for designing a screen of the operation panel 63, and automatically generates a program on the basis of interactive visual design.

Builder 103 includes compilers that support respective programming languages, such as C#, C++, C, and Java.

Source code of the extended application 78 is written in C# or Java, and is generated more efficiently than in C/C++. The source code of the extended application 78 is translated into an intermediate language by the compiler for C# or Java in the builder 103. The resulting intermediate language is interpreted and executed, or just-in-time (JIT) compiled and executed, by a C# Runtime Package or a Java Runtime Environment in the platform. The C# runtime and the Java runtime include a CLR and a JVM, respectively.

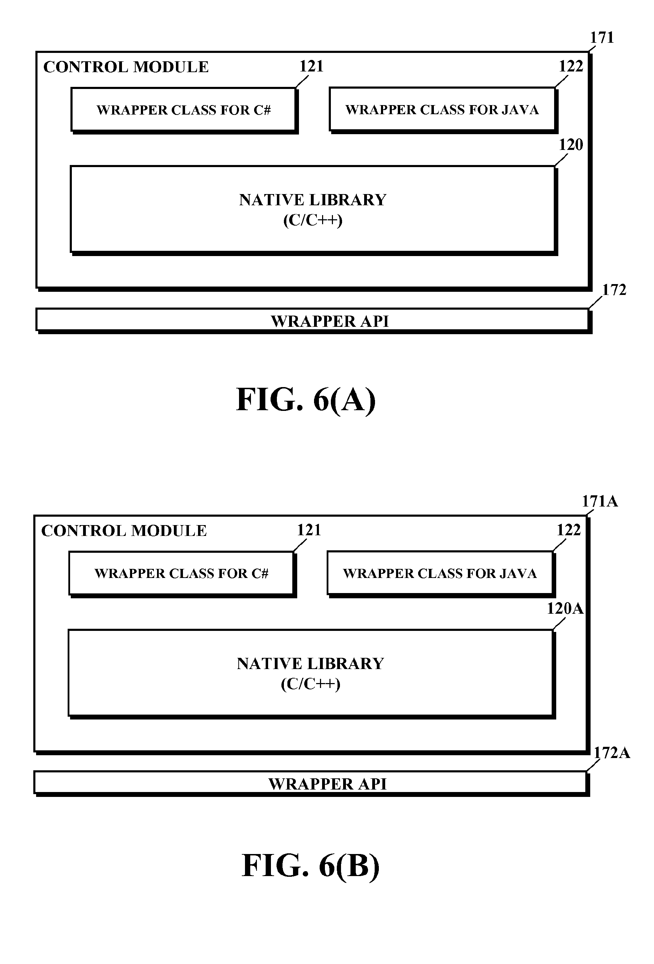

FIG. 6A is a block diagram illustrating a configuration of a control module for a first platform (PL1) and a wrapper API at a level lower than the control module. The control module 171 of the software development apparatus 12 illustrated in FIG. 5 includes a class library for high-speed communication and image process at an application level. As illustrated in FIG. 6A, the class library includes a native library 120 obtained by compiling C or C++ source code, and a wrapper class 121 and a wrapper class 122 obtained by compiling source code of a C# wrapper class and source code of a Java wrapper class, respectively.

The wrapper class 121 for C# is a class library that enables a part of the source code of the extended application 78 to call a C function or a method (native subroutine) of a C++ class in the native library 120 as a method of an instance of a C# class. The wrapper class 121 includes a type-conversion method that converts the signature of the method of the instance of the C# class to the signature of the C function or the method (native subroutine) of the C++ class in the native library 120.

A part of the source code of the extended application 78 calls a native subroutine via the type-conversion method.

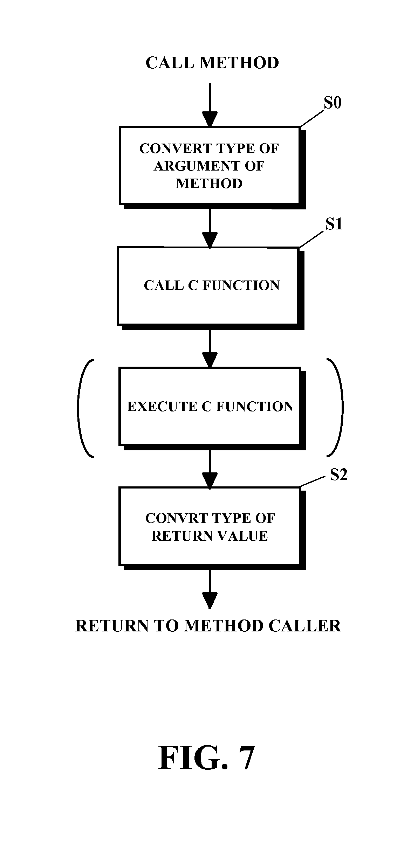

FIG. 7 is a flowchart illustrating a process of a type-conversion method included in a wrapper class.

Initially at step S0, an argument type included in code (or signature) for calling a method of an instance of a C# class is converted to a type of an argument of the corresponding native subroutine in the native library 120.

At step S1, the native subroutine (C function) is called with the argument of the native subroutine. Thus, the native subroutine (C function) is executed and a return value is generated.

At step S2, the type of the return value is converted to the corresponding type in the method caller (that is, return value type in the signature) and returned to the method caller.

The wrapper class 121 illustrated in FIG. 6A includes the above-described type-conversion method. The wrapper class 121 also includes a constructor and a deconstructor that perform memory management in accordance with the C# specification and are used in conversion of an intermediate language specification.

The wrapper class 122 for Java has a configuration similar to that of the wrapper class 121 for C# and performs similarly to the wrapper class 121 for C#.

The wrapper class 121 for C# and the wrapper class 122 for Java are generated in the corresponding intermediate languages in a wrapper-class generation tool. For example, the wrapper-class generation tool includes a tool that generates the C# wrapper class 121 using C++/CLR, and a tool that generates the Java wrapper class 122 using a JNI.

The native library 120 in the control module 171 illustrated in FIG. 6A is generated using the OS or/and library (for example, NET Framework standard library) of the platform 70 (PL1) of the smartphone 14 illustrated in FIG. 3. The wrapper API 172 of the software development apparatus 12 illustrated in FIG. 5 is configured such that the platform 70 may be regarded as PL1 as seen from the native library 120.

The software development apparatus 12 also includes a control module 171A illustrated in FIG. 6B. FIG. 6B is a block diagram illustrating a configuration of a control module for a second platform (PL2) and a wrapper API at a level lower than the control module.

The control module 171A includes a native library 120A having the same function as the native library 120, the wrapper class 121 for C#, and the wrapper class 122 for Java. The wrapper class 121 and the wrapper class 122 of the control module 171A illustrated in FIG. 6B are the same as the wrapper class 121 and the wrapper class 122 of the control module 171 illustrated in FIG. 6A.

The native library 120A is generated using the OS and/or library (e.g., Linux class library) of another platform 70 (PL2). The wrapper API 172A of the software development apparatus 12 illustrated in FIG. 5 is configured such that the platform 70 may be regarded as PL2 as seen from the native library 120A.

To share the use of the wrapper class 121 and the wrapper class 122, the signature of each method in the native library 120A is made the same as the signature of each method in the native library 120. That is, the native libraries 120 and 120A in the C or C++ source code are the same, except for the APIs of the first platform (PL1) and the second platform (PL2) and their neighboring configurations.

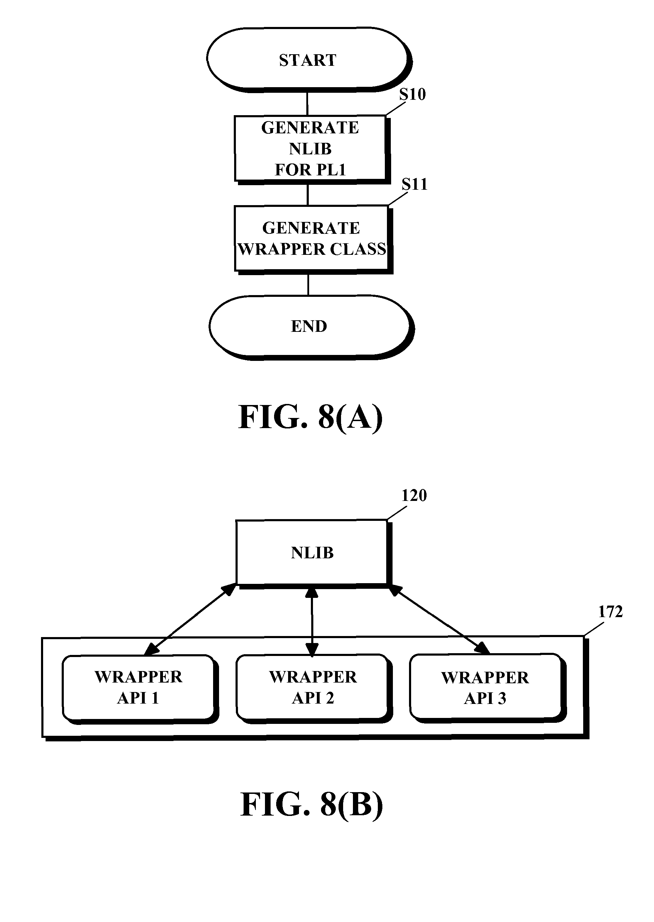

FIG. 8A is a flowchart illustrating a process of generating the control module 171 for the first platform (PL1). FIG. 8B illustrates step S10 in the flowchart of FIG. 8A.

At step S10 the native library (NLIB) 120 for PL1 is generated. As illustrated in FIG. 8B, the NLIB 120 uses, for example, API1-API3 in the wrapper API 172 (class library) of the software development apparatus 12.

At step S11, a class library for each intermediate language, i.e., the wrapper class 121 and the wrapper class 122 are generated.

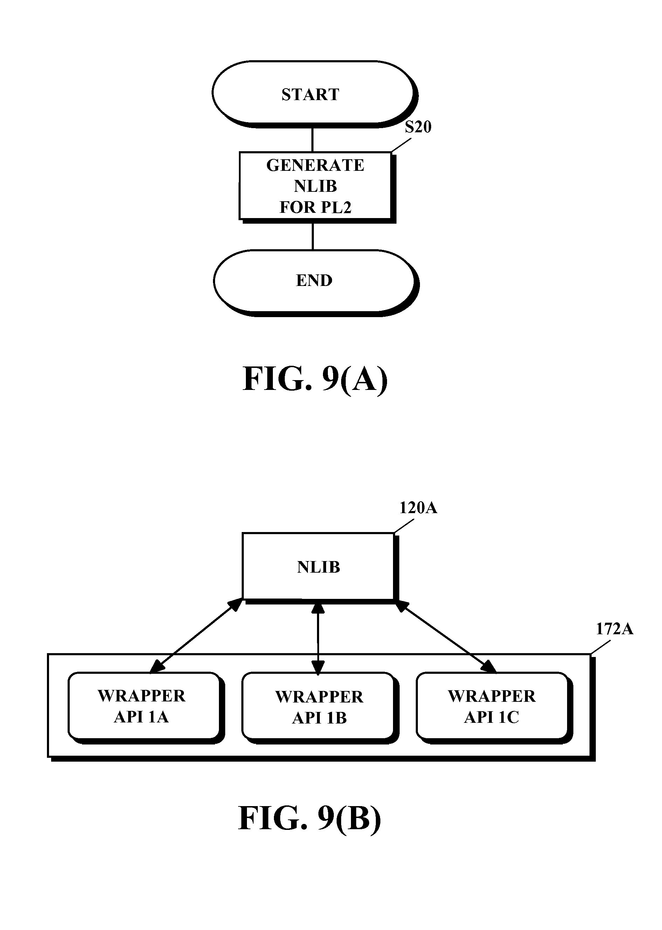

FIG. 9A is a flowchart illustrating a procedure of generating the control module 171A for the second platform (PL2). FIG. 9B illustrates step S20 in the flowchart of FIG. 9A.

At step S20 of FIG 9B, NLIB 120A for PL2 is generated. As illustrated in FIG. 9B, NLIB 120A uses, for example, API1A-API3A in the wrapper API 172A of the software development apparatus 12.

Since the wrapper class 121 and the wrapper class 122 in the control module 171 generated in step S11 of FIG. 8A are the same as the wrapper class 121 and the wrapper class 122 in the control module 171A, it is not necessary to further generate the wrapper class 121 and the wrapper class 122 in the control module 171A.

Referring back to FIG. 5, the software development apparatus 12 further includes a hardware (HW) simulator 105 that supports the hardware of the smartphone 14. An input device 950 and a display device 951 form the input/output unit 95 illustrated in FIG. 4. In FIG. 5, all configurations, except the extended application 78 and the service proxy in the Web service interface 7A are prepared in advance as a development environment.

In the present embodiment, NLIB 120, which is common to multiple programming languages, is used, through the corresponding wrapper class 121 or wrapper class 122, from any extended application 78 that uses one of the multiple programming languages. Thus, NLIB 120 may be efficiently linked to the extended application 78.

The native libraries 120 and 120A (shown in FIGS. 6A and 6B, respectively) having the same function are generated, for example, in the C/C++ language for respective platforms. The wrapper classes 121 and 122 used in common in both native libraries and configured to support different programming languages are generated. Thus, it is possible to easily generate an SDK that supports multiple types of platforms and multiple programming languages while using native libraries that allow high-speed processing. In particular, it is possible to greatly contribute to a simplified configuration of an SDK for multiple types of smartphone applications.

Additionally, programmers for different programming languages can use the NLIB 120 as an extended library for an intermediate language of the programming language, without regard to the fact that the NLIB 120 is native code.

Also, NLIB 120 is used in common in multiple programming languages. Therefore, it is possible to prevent delays in the development and improvement of smartphone applications that involve the use of different programming languages.

While various aspects and embodiments have been disclosed herein, other aspects and embodiments are possible. For example, other designs may be used in which the above-described components are each present.

For example, the wrapper class 121 and the wrapper class 122 illustrated in FIG. 6A or FIG. 6B may be included in an API 174 of the software development apparatus 12 illustrated in FIG. 5. That is, the wrapper class 121 and the wrapper class 122 may be used as part of the API 174.

A programming language compiled to an intermediate language may be a language (for example, Objective-C) other than those in the above-described embodiment. A native library may be generated by using part or all of the assembly language.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

## Claims

1. A storage device comprising a software development kit (SDK), the SDK comprising:
a first native library configured to support a first platform;
a second native library configured to support a second platform;
a first wrapper class configured to be used with the first native library and the second native library, the first wrapper class being configured such that at least one of a first function or a first method in the first native library and the second native library can be called in a first intermediate language; and
a second wrapper class configured to be used with the first native library and the second native library, the second wrapper class being configured such that at least one of a second function or a second method in the first native library and the second native library can be called in a second intermediate language.

2. The storage device according to Claim 1, wherein
the first native library and the second native library include a plurality of native subroutines, wherein the plurality of native subroutines comprises at least one of a plurality of native functions or a plurality of native methods;
the first wrapper class includes a first type-conversion method configured to:
in response to a first call to a function written in the first intermediate language, convert at least one first initial-argument type for calling the first function written in the first intermediate language to a first converted-argument type corresponding to at least one first native subroutine of the plurality of first native subroutines;
call the at least one first native subroutine of the plurality of first native subroutines and convert a first initial-return value type for the at least one first native subroutine of the plurality of first native subroutines to a first converted-return value type in the first intermediate language; and
return the first converted-return value type to a first caller of the
function written in the first intermediate language; and
the second wrapper class includes a second type-conversion method configured to:
in response to a second call to a function written in the second intermediate language, convert at least one second initial-argument type for calling a function written in the second intermediate language to a second converted-argument type corresponding to at least one second native subroutine of the plurality of second native subroutines;
call the at least one second native subroutine of the plurality of second native subroutines and convert a second initial-return value type for the at least one second native subroutine of the plurality of second native subroutines to a second converted-return value type in the second intermediate language; and
return the second converted-return value type to a second caller of the function written in the second intermediate language.

3. The storage device according to Claim 1 or 2, wherein
the first wrapper class performs memory management in accordance with a specification of the first intermediate language;
the second wrapper class performs memory management in accordance with a specification of the second intermediate language;
the first wrapper class includes a first constructor and a first deconstructor used in conversion of an intermediate language specification; and
the second wrapper class includes a second constructor and a second deconstructor used in conversion of an intermediate language specification.

4. The storage device according to Claim 1, 2 or 3, wherein
the first wrapper class is generated using the first intermediate language in a wrapper-class generation tool; and
the second wrapper class is generated using the second intermediate language in the wrapper-class generation tool.

5. The storage device according to Claim 4, wherein
the first intermediate language is a #C intermediate language;
the second intermediate language is a Java intermediate language; and
the wrapper-class generation tool includes a tool for generating the first wrapper class using a C++/Common Language Runtime and a tool for generating the second wrapper class using a Java Native Interface.

6. The storage device according to Claim 1, 2, 3, 4, or 5, wherein
a signature of the method in the first native library is the same as a signature of the method in the second native library; and
the first wrapper class and the second wrapper class are shared by the first native library and the second native library.

7. The storage device according to Claim 1, 2, 3, 4, 5, or 6, wherein
the first native library is generated using an operating system or a library of the first platform; and
the second native library is generated using an operating system or a library of the second platform.

8. The storage device according to Claim 7, wherein
the SDK is configured for developing an extended application of a mobile terminal; the first platform comprises a platform of a first mobile terminal; and
the second platform comprises a platform of a second mobile terminal and is different from the first platform of the first mobile terminal.

9. The storage device according to Claim 8, wherein source code of the extended application is written in C#.

10. The storage device according to Claim 9, wherein the source code is translated into an intermediate language by a compiler that supports C#, and the resulting intermediate language is interpreted and executed by a C# runtime in the platform of the first mobile terminal.

11. The storage device according to Claim 10, wherein the source code of the extended application is written in Java.

12. The storage device according to Claim 11, wherein the source code is translated into an intermediate language by a compiler that supports Java, and the resulting intermediate language is interpreted and executed by a Java runtime in the platform of the second mobile terminal.

13. The storage device according to Claim 8, further comprising a Web service interface, wherein the extended application communicates with a Web service of an image forming apparatus through the Web service interface to request a service from the image forming apparatus.

14. The storage device according to Claim 13, wherein the extended application communicates with a cloud through the Web service interface to request a cloud service from the cloud.
